# EUROPEAN PATENT SPECIFICATION

(11) **EP 4 254 533 B1**
(45) Date of publication and mention of the grant of the patent: **04.06.2025**
(21) Application number: 22901571.4
(22) Date of filing: 19.10.2022
(51) Int. Cl.: H01M 4/04, B30B 11/00

(54) **CALENDERING ROLL PRESS FOR MANUFACTURING DRY ELECTRODES**
KALANDERWALZENPRESSE ZUR HERSTELLUNG VON TROCKENELEKTRODEN
PRESSE À ROULEAUX DE CALANDRAGE POUR LA FABRICATION D'ÉLECTRODES SÈCHES

(30) Priority: 03.12.2021 KR 20210172100
(43) Date of publication of application: 04.10.2023
(73) Proprietor: LG Energy Solution, Ltd., Seoul 07335 (KR)
(72) Inventor: KIM, Soon, Daejeon 34122 (KR); KIM, Dong Yeon, Daejeon 34122 (KR); KONG, Jin Hak, Daejeon 34122 (KR)
(74) Representative: Plasseraud IP
(86) International application number: PCT/KR2022/015932
(87) International publication number: WO 2023/101212

(56) References cited:
- WO-A1-2020/100561
- JP-A- 2000 133 251
- JP-A- 2008 226 502
- JP-A- 2021 077 441
- JP-B2- 6 904 230

## Description

### [Technical Field]

An aspect of the present invention relates to a calendering roll press machine for manufacturing a dry electrode.

More specifically, an aspect of the present invention relates to a calendering roll machine for manufacturing a dry electrode in which a calendering crown roll is separated into a plurality of parts and has each part rotating independently.

In addition, an aspect of the present invention relates to a calendering roll machine for manufacturing a dry electrode, which can make the quality of a dry electrode sheet uniform by differently adjusting the angular velocity of each part of a crown roll.

### [Background Technology of the Invention]

Recently, secondary batteries capable of charging and discharging are widely being used as a power source for wireless mobile devices.

In addition, secondary batteries are drawing attention not only as a power source for mobile devices such as mobile phones, smartphones, laptops, and camcorders, but also as a power source for electric vehicles and hybrid electric vehicles that are suggested as measures to solve air pollution caused by conventional gasoline vehicles and diesel vehicles that use fossil fuels.

Therefore, the kinds of application that use a secondary battery are being greatly diversified due to the advantages of the secondary battery, and the secondary battery is expected to be applied to various fields and appliances in the future than it is now.

Such secondary battery can be classified into a lithium-ion battery, a lithium-ion polymer battery, a lithium polymer battery, etc. depending on the composition of an electrode and electrolyte, and the usage of the lithium-ion polymer battery, which is easy to be manufactured and is less likely to have electrolyte leakage, has been increasing.

Generally, depending on the shape of the battery case, a secondary battery can be classified into a cylindrical battery and a prismatic battery each having an electrode assembly embedded into a cylindrical or a prismatic metal can, and a pouch-type battery electrode assembly embedded into a pouch-type case with an aluminum laminated sheet.

Also, the electrode assembly embedded into the battery case is capable of charging and discharging by being composed of a cathode, an anode, and a separation membrane interposed between the cathode and the anode, and may be classified as a jelly-roll type that is wrapped after interposing a separation membrane between a long sheet-type cathode and anode coated with an active material, and a stack type that sequentially stacks a plurality of cathodes and anodes with a predetermined size interposed onto the separation membrane.

Here, because electric vehicles, etc. use a high-power electrical energy, they require a plurality of battery modules, and these battery modules have a plurality of battery cells connected in series or parallel on the inside.

Meanwhile, in the electrode process, an electrode has been commonly manufactured through a wet electrode process in which a solvent of the slurry is removed through a drying process after applying an electrode active material, a binder, and a conductive material on a current collector.

The wet electrode process as described above has been difficult to improve in productivity due to an increase in manufacturing cost, since energy is required to remove the solvent from the slurry applied to the current collector.

Therefore, a method of manufacturing an electrode through a dry electrode process without applying the slurry to the current collector is being proposed.

The dry electrode process is prepared by mixing an electrode active material, a binder, and a conductive material without a liquid medium such as a solvent or a dispersion medium, and the powder mixture is made into a dry electrode sheet through a calendering process, and the electrode is manufactured by laminating the prepared dry electrode sheet to the current collector.

Such dry electrode process increases energy density compared to the conventional wet electrode process, and the lifespan is doubled or more compared to the existing wet electrode process by having an improve in charge and discharge characteristics, and the drying process required in the existing wet electrode process is not required, so it has an advantage of not requiring a drying room and the corresponding space for the drying process as well as the cost of drying energy.

Here, in the dry electrode process, the calendering process of manufacturing the dry electrode sheet proceeds through a calendering roll press in which a plurality of calendering crown rolls are arranged adjacently in multilevel, and proceeds a process of stretching a dry electrode sheet inserted between each calendering crown roll arranged in multilevel. JP2021-077441 A discloses a calendering roll press with a cylindrical calendering roll, the cylindrical calendering roll including a driven center roller and driven first and second side rollers.

That is, the dry electrode sheet is stretched by inserting and passing through the dry electrode sheet for manufacturing the electrode by laminating it with the current collector between the multilevel calendering crowns provided in plurality.

Here, the calendering roll press installs calendering crown rolls in multilevel, each calendering crown roll installed in multilevel rotates at different speeds, and the linear speed of each crown roll increases along the processing direction.

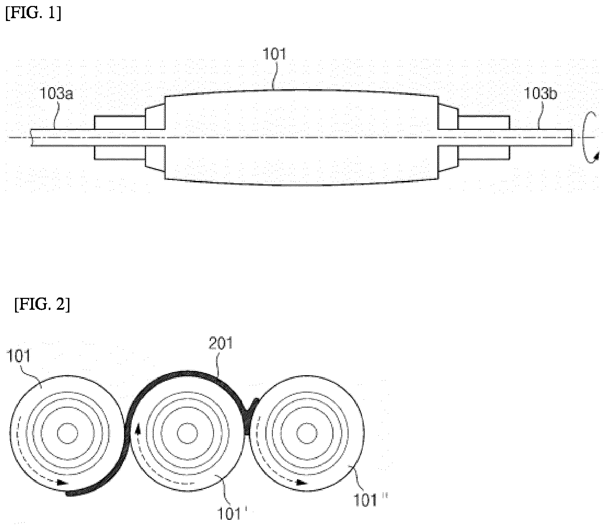

As illustrated in FIG. 1, the calendering roll has a bigger diameter at the center of the roll than both sides to which the roll drive shafts 103a, 103b are connected, and it has a gently convex curve shape in the longitudinal direction of the roll.

Accordingly, when the linear speed ratio of the crown roll and the crown roll adjacent to each other exceeds a specific value, there may be a high risk of a bank phenomenon in which the center of the dry electrode sheet, which is inserted into the center part that has a bigger roll diameter compared to the roll diameter of the side part of the roll, is unable to pass between the rolls and gets clogged.

That is, as illustrated in FIG. 2, a bank phenomenon occurs where the dry electrode sheet 201 inserted between the calendering crown rolls 101, 101', 101" cannot pass through the calendering rolls 101, 101', 101" and gets clumped together, thereby blocking the entrance.

The occurrence frequency of this bank phenomenon increases as the diameter of the roll increases.

As described above, when bank phenomenon occurs on the dry electrode sheet passing between the calendering crown rolls, there may be problems of having difficulty in producing a dry electrode sheet of uniform quality, and having the quality of the dry electrode sheet being deteriorated.

### [Description of the Invention]

### [Technical Problem]

An aspect of the present invention was made to solve the problems mentioned above, and it is directed to provide a calendering roll press for manufacturing a dry electrode capable of separating a single calendering crown roll into a plurality of parts, and that can control the angular speed of each part to be different by having each part that rotates independently.

Also, an aspect of the present invention is directed to provide a calendering roll press for manufacturing a dry electrode capable of inhibiting a bank phenomenon occurring at an entrance between crown rolls in a calendering process by setting the angular velocity of the center part of the crown roll to be lower than the angular velocity of the side part.

In addition, an aspect of the present invention is directed to provide a calendering roll press for manufacturing a dry electrode capable of making the quality of dry electrode sheets uniform by differently adjusting the angular velocity of each part of the crown roll.

### [Technical Solution]

The invention is set out in the appended claims. In order to solve the problems mentioned above, an aspect of the present invention, in terms of a calendering roll press for manufacturing a dry electrode in which a plurality of calendering crown rolls are arranged to stretch a dry electrode sheet, the calendaring roll press for manufacturing a dry electrode includes: a calendaring crown roll including a center roller in which an inner wheel drive shaft protrudes in the longitudinal direction at the center of both sides surface, and a first side roller and a second side roller with inner surfaces facing with both sides surface of the center roller, respectively, the first side roller and the second side roller have hollow outer wheel drive shafts protruding from the center of their outer surfaces in the longitudinal direction through which the inner wheel drive shaft passes, and a motor that independently and rotatably drives the center roller, the first side roller and the second side roller .

As one example, the center roller and each side roller rotate at different angular velocities.

As another example, the angular velocity of the center roller is slower than the angular velocity of each side roller.

As another example, the angular velocities of the first and second side rollers are equal to each other.

As a specific example, the outer circumferential surfaces of the first side roller, the center roller, and the second side roller may have a continuous parabolic surface in which the center roller is convex.

As an example, the inner wheel drive shaft of the center roller is longer than the outer wheel drive shafts of the first and second side rollers, so that inner wheel drive shaft is exposed to the outside of the outer wheel drive shaft.

As another example, at least one or more bearings are provided between the inner periphery surface of the outer wheel drive shaft and the outer periphery surface of the inner wheel drive shaft.

As a specific example, the bearing is any one of a ball bearing, a roller bearing, or a journal bearing.

As another specific example, the motor includes a center motor connected to the center roller to rotate the center roller, and a side motor connected to the first sided roller and the second side roller to rotate each side roller.

As an example, the inner wheel drive shaft provided on one side of the center roller rotates by being connected to the center motor, and each outer wheel drive shaft provided on the outer surface of the first and second side rollers rotates by being connected to each side motor.

As a specific example, the inner wheel drive shaft rotates by being connected to a center sprocket provided on a shaft of a center motor by a chain, and each outer wheel drive shaft rotates independently by being connected by a chain to a side sprocket provided on a shaft of each side motor.

As another example, the inner wheel drive shaft provided on one side of the center roller rotates by being connected to the center motor, and each outer wheel drive shaft provided on the outer surface of the first and second side rollers rotates together by being connected to a single side motor.

As a specific example, the inner wheel drive shaft rotates by being connected to a center sprocket provided on a shaft of a center motor by a chain, and each outer wheel drive shaft is connected by a chain to each side sprocket provided on both sides of a single shaft extending to both sides of the single side motor and rotates together.

### [Advantageous Effects]

According to an aspect of the present invention, a single calendering crown roll can be separated into a plurality of parts, and the angular velocity of each part can be controlled to be different by having each part rotate independently.

Also, a bank phenomenon occurring between crown rolls in the calendering process can be inhibited by setting the angular velocity of the center part of the crown roll to be lower than the angular velocity of the side part.

In addition, it is possible to make the quality of the dry electrode sheet uniform by adjusting the angular velocity of each part of the crown roll to be different.

### [Brief Description of the Drawings]

FIG. 1 is a side cross-sectional view schematically illustrating a calendering crown roll of a calendering roll press for manufacturing a dry electrode according to the conventional art.
FIG. 2 is a diagram schematically illustrating the calendering process of a calendering roll press for manufacturing a dry electrode according to the conventional art.
FIG. 3 is a diagram schematically illustrating the calendering roll press according to an exemplary embodiment of the present invention.
FIG. 4 is a side cross-sectional view schematically illustrating the calendering crown roll according to the present exemplary embodiment.
FIG. 5 is a cross-sectional view along line A-A' of FIG. 4.
FIG. 6 is a cross sectional view along line B-B' of FIG. 4.
FIG. 7 is a diagram schematically illustrating the calendering roll press according to another exemplary embodiment of the present invention.
FIG. 8 is a diagram schematically illustrating another modified example of the calendering roll press according to the present exemplary embodiment.

### [Reference Numerals]

1: CALENDERING CROWN ROLL
10: CENTER ROLLER
11: INNER WHEEL DRIVE SHAFT
20a: FIRST SIDE ROLLER
20b: SECOND SIDE ROLLER
21a, 21b: OUTER WHEEL DRIVE SHAFT
23: BEARING
30: MOTOR
31: CENTER MOTOR
32: SHAFT
33: CENTER SPROCKET
34: CHAIN
35: SIDE MOTOR
35a: FIRST SIDE MOTOR
35b: SECOND SIDE MOTOR
36: SHAFT
37: SIDE SPROCKET
38: CHAIN
100, 100', 100": CALENDERING ROLL PRESS

### [Detailed Description]

Embodiments of the present invention, in terms of a calendering roll press for manufacturing a dry electrode in which a plurality of calendering crown rolls are arranged to stretch a dry electrode sheet, provide a calendering roll press for manufacturing a dry electrode that includes: a calendaring crown roll including a center roller in which an inner wheel drive shaft protrudes in the longitudinal direction at the center of both sides surface, and a first side roller and a second side roller with inner surfaces facing both side surfaces of the center roller, respectively, the first side roller and the second side roller have hollow outer wheel drive shafts protruding from the center of their outer surfaces in the longitudinal direction through which the inner wheel drive shaft passes, and a motor that independently and rotatably drives the center roller, the first side roller and the second side roller

### [Modes of the Invention]

Hereinafter, embodiments of the present invention will be described in detail. First, the terms and the words used in this specification and claims should not be interpreted as limited to commonly used meanings or dictionary meanings and should be interpreted with meanings and concepts which are consistent with the technological scope of the embodiments of the invention based on the principle that the inventors have appropriately defined concepts of terms in order to describe the embodiments of the invention in the best way.

The terms "comprise," "include" and "have" used herein designate the presence of characteristics, numbers, steps, actions, components or elements described in the specification or a combination thereof, and it should be understood that the possibility of the presence or addition of one or more other characteristics, numbers, steps, actions, components, elements or a combination thereof is not excluded in advance.

In addition, when a part of a layer, a film, a region or a plate is disposed "on" another part, this includes not only a case in which one part is disposed "directly on" another part, but a case in which a third part is interposed therebetween. In contrast, when a part of a layer, a film, a region or a plate is disposed "under" another part, this includes not only a case in which one part is disposed "directly under" another part, but a case in which a third part is interposed therebetween. In addition, in the specification of the present invention, "on" may include not only a case of being disposed on an upper part but also a case of being disposed on a lower part.

In addition, when a part of a layer, a film, a region or a plate is disposed "on" another part, this includes not only a case in which one part is disposed "directly on" another part, but a case in which a third part is interposed therebetween. In contrast, when a part of a layer, a film, a region or a plate is disposed "under" another part, this includes not only a case in which one part is disposed "directly under" another part, but a case in which a third part is interposed therebetween. In addition, in this application, "on" may include not only a case of disposed on an upper part but also a case of disposed on a lower part.

### (First Embodiment)

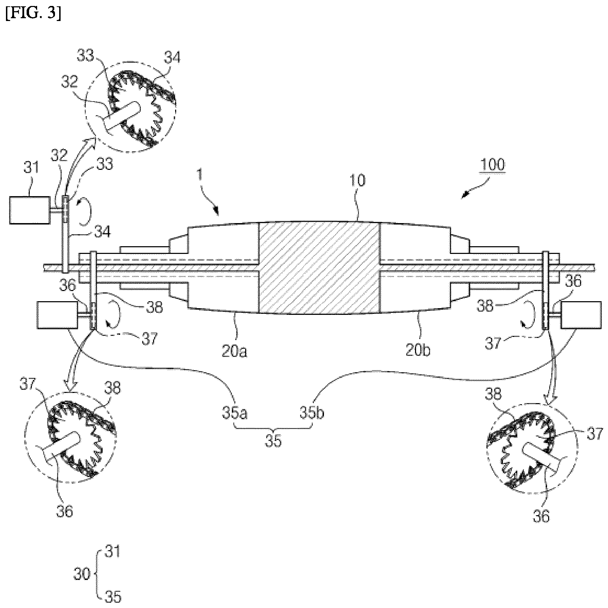

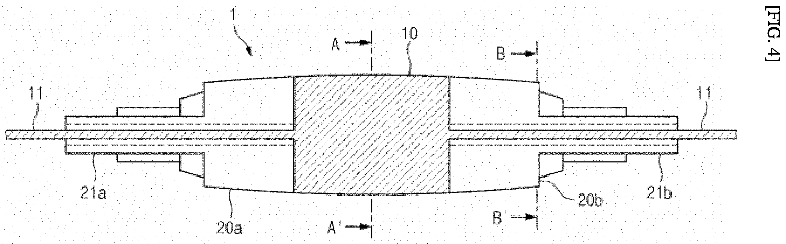

FIG. 3 is a diagram schematically illustrating the calendering roll press according to an exemplary embodiment of the present invention. FIG. 4 is a side cross-sectional view schematically illustrating the calendering crown roll according to the present exemplary embodiment.

As illustrated in FIG. 3 and FIG. 4, the calendering roll press for manufacturing a dry electrode 100 according to an exemplary embodiment of the present invention is for stretching a dry electrode sheet (not shown) by passing it between a plurality of calendering crown rolls 1 installed.

In the illustrated exemplary embodiment, it is configured by including a calendering crown roll 1 including a center roller 10 and a first side roller 20a and a second side roller 20b provided on both sides of the center roller 10, and a motor 30 that rotates the center roller 10 and the first and second side rollers 20a, 20b.

The calendering crown roll 1 includes a center roller 10 and a first side roller 20a and a second side roller 20b whose inner surfaces face each other on both sides of the center roller 10.

The center roller 10 has an inner wheel drive shaft 11 protruding in the longitudinal direction at the center of both sides.

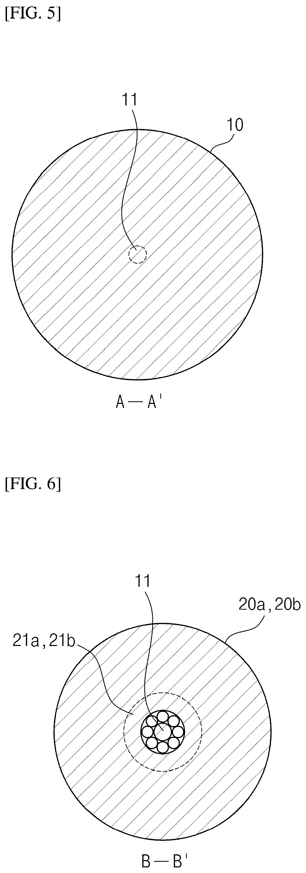

That is, as illustrated in FIG. 5, the center roller 10 has a rod-shaped inner wheel drive shaft 11 protruding in the longitudinal direction of the center roller 10 at the center of both sides.

The first side roller 20a and the second side roller 20b are respectively provided on both sides of the center roller 10.

Here, the inner surfaces of the first side roller 20a and the second side roller 20b face each other with respect to both sides of the center roller 10, and outer wheel drive shafts 21a, 21b protrude in the longitudinal direction from the center of the outer surface of the first side roller 20a and the second side roller 20b.

Also, the outer wheel drive shafts 21a, 21b of the first side roller 20a and the second side roller 20b have a hollow shape so that the inner wheel drive shaft 11 of the center roller 10 can pass through.

As a result, the inner surfaces of the first side roller 20a and the second side roller 20b face each other with respect to both sides of the center roller 10, and the inner wheel drive shaft 11 penetrates in the longitudinal direction of the outer wheel drive shafts 21a, 21b provided at the center of the outer surface of the first side roller 20a and the second side roller 20b, having the ends of the inner wheel drive shaft protruding outside the outer wheel drive shafts 21a, 21b.

Also, the outer circumferential surfaces of the first side roller 20a, the center roller 10, and the second side roller 20b have a continuous parabolic surface in which the center roller 10 is convex.

Here, the first side roller 20a and the second side roller 20b are respectively installed on both sides of the center roller 10 in a form in which the hollow outer wheel drive shafts 21a, 21b each allow passage of the inner wheel drive shaft 11 protruding from the center of both sides of the center roller 10.

The motor 30 is connected to the center roller 10, the first side roller 20a, and the second side roller 20b to independently rotate the center roller 10 and the first and second side rollers 20a, 20b.

Here, the motor 30 includes a center motor 31 connected to the center roller 10 to rotate the center roller 10, and a side motor 35 connected to the first side roller 20a and the second side roller 20b to rotate the first side roller 20a and the second side roller 20b.

At this time, the side motor 35 may include a first side motor 35a connected to the first side roller 20a to rotate the first side roller 20a and a second side motor 35b connected to the second side roller 20b to rotate the second side roller 20b.

According to the structure as described above, the inner wheel drive shaft 11 provided on any one side of the inner wheel drive shaft 11 respectively provided on both sides of the center roller 10 rotates by being connected to the center motor 31, and each outer wheel drive shafts 21a, 21b provided on the outer surfaces of the first side roller 20a and the second side roller 20b rotates by being connected to the first side motor 35a and the second side motor 35b, respectively.

Here, the center roller 10 and each side rollers 20a, 20b rotate at different angular velocities. That is, the center roller 10 located at the center of the calendering crown roll 1 and each side rollers 20a, 20b provided on both sides of the center roller 10 are independent rollers that are structurally separated from each other, it is possible to rotate by varying the angular velocity of each rollers 10, 20a, 20b.

As described above, when a dry electrode sheet is stretched while passing between the calendering crown rolls 1 after arranging a plurality of calendering crown rolls 1 adjacent to each other, in order to inhibit the back phenomenon occurring between the calendering crown rolls 1, it is helpful to have the center roller 10 and each side rollers 20a, 2b with different diameters to rotate in different angular velocities.

Here, the angular velocity of the center roller 10 of the calendering crown roll 1 is set to be slower than the angular velocity of each side roller 20a, 20b provided on both sides of the center roller 10.

That is, when the rotational speed of the center roller 10 of the calendering crown roll 1 is set to be slower than the rotational speed of each side roller 20a, 20b provided on both sides of the center roller 10, the occurrence of the bank phenomenon, in which the dry electrode sheet is unable to smoothly pass through and gets stuck at the center of the roll, is either inhibited or alleviated, as the linear speed of the center roller 10 with a big roll diameter is high.

Meanwhile, the angular velocities of the first side roller 20a and the second side roller 20b are set equal to each other.

That is, the first side roller 20a and the second side roller 20b, which are set to be faster than the angular velocity of the center roller 10 in the calendering crown roll 1, rotate at the same angular velocity.

To this end, the calendering roll press 100 for manufacturing dry electrodes according to the embodiment of the present invention may further include a control unit (not shown), and the control unit can control the angular velocities of the center roller 10, the first side roller 20a, and the second side roller 20b by being electrically connected to the center motor 31, the first side motor 35a, and the second side motor 35a. At this time, the first side roller 20a and the second side roller 20b can be controlled to rotate at the same angular velocity.

In an exemplary embodiment of the present invention, while the angular velocities of the first side roller 20a and the second side roller 20b are set equal to each other, in some cases, it is also possible to more effectively inhibit the bank phenomenon that may occur between the calendering crown rolls 1 by setting the angular velocities of the first side roller 20a and the second side roller 20b to be different.

Meanwhile, each inner wheel drive shaft 11 of the center roller 10 is to be longer than the outer wheel drive shafts 21a, 21b of the first and second side rollers 20a, 20b, so that the ends of each inner wheel drive shaft 11 is exposed to the outside of the outer wheel drive shafts 21a, 21b.

Through this structure, the inner wheel drive shaft 11 of the center roller 10 becomes connected to the center motor 31, and each outer wheel drive shaft 21a, 21b of the first and second side rollers 20a, 20b becomes connected to the first and second side motors 35a, 35b.

In one exemplary embodiment, the inner wheel drive shaft 11 rotates by being connected to the center sprocket 33 provided on the shaft 32 of the center motor 31 by a chain 34, the first side roller 20a provided in the one side of the center roller 10 rotates by being connected to the side sprocket 37 provided on the shaft 36 of the first side motor 35a by a chain 38, and the second side roller 20b provided on the other side of the center roller 10 is connected to the side sprocket 37 provided on the shaft 36 of the second side motor 35b by a chain 38, so that all the rollers 10, 20a, 20b can rotate independently.

In the illustrated exemplary embodiment of the present invention, the inner wheel drive shaft 11 and each outer wheel drive shaft 21a, 21b are made to rotate by being connected to the sprockets 33, 37 of each motor 31, 35a, 35b by a chain 34,38, but it is also possible for the inner wheel drive shaft 11 and each outer wheel drive shaft 21a, 21b to rotate by being connected with a belt, and other various power transmission mechanisms may be applied.

Meanwhile, as illustrated in FIG. 6, at least one or more bearings 23 are provided between the inner periphery surface of the outer wheel drive shafts 21a, 21b and the outer periphery surface of the inner wheel drive shaft 11.

That is, a bearing 23 is provided between the outer wheel drive shafts 21a, 21b provided in a hollow shape in the first and second side rollers 20a, 20b and the inner wheel drive shaft 11 of the center roller 10 installed within the outer wheel drive shafts 21a, 21b.

A plurality of bearings 23 may be provided around the inner wheel drive shaft 11 to correspond to its penetration length.

As described above, by having the bearing 23 provided between the outer wheel drive shafts 21a, 21b and the inner wheel drive shaft 11, the inner wheel drive shaft 11 rotating within the hollow outer wheel drive shafts 21a, 21b can be stably supported, thereby the energy loss due to friction can be reduced.

Here, the bearing 23 may be made of any one of a ball bearing, a roller bearing, or a journal bearing.

In other words, depending on the design conditions such as axial load, rotational speed, etc., either a rolling bearing or a sliding bearing may be selected appropriately.

Hereinafter, an operation process of the calendering roll press for manufacturing a dry electrode according to an exemplary embodiment of the present invention will be described by referring to FIG. 3.

First, in the calendering roll press 100 according to an exemplary embodiment of the present invention, a plurality of calendering crown rolls 1 composed of the center roller 10 and the first and second side rollers 20a, 20b are arranged so as to be adjacent to each other, and the dry electrode sheet is stretched while passing through a plurality of calendering crown rolls 1.

Then, the center roller 10, the first side roller 20a, and the second side roller 20b are rotated by driving the center motor 31 that rotates the center roller 10 and the first side motor 35a and the second side motor 35b that rotate the first side roller 20a and the second side roller 20b, respectively.

Here, in the calendering crown roll 1, the first side roller 20a and the second side roller 20b respectively provided on the center roller 10 and the sides of the center roller 10 are rotated independently.

In addition, while the center roller 10 and the first side roller 20a and the second side roller 20b provided on both sides of the center roller 10 rotate different angular velocities, the angular velocity of the center roller 10 is set to be slower than the angular velocities of the first side roller 20a and the second side roller 20b respectively provided on both sides of the center roller 10.

Here, by controlling the first side motor 35a and the second side motor 35b so that the angular velocities of the first side roller 20a and the second side roller 20b are equal to each other and faster than the angular velocity of the center roller 10, it is possible to inhibit the bank phenomenon occurring in the dry electrode sheet passing between the calendering crown rolls 1.

The embodiment of the present invention as described above, separates the calendering crown roll 1 into three parts: the center roller 10, the first side roller 20a, and the second side roller 20b; and varies the angular velocities between the separated center roller 10 and the first and second side rollers 20a, 20b. And by setting the angular velocities of the first side roller 20a and the second side roller 20b to equal each other and to be faster than the angular velocity of the center roller 10, the bank phenomenon, which occurs at the center part in contact with the center roller 10 whose diameter is bigger than both side parts of the dry electrode sheet in contact with the first and second side rollers 20a, 20b whose diameter is relatively small, may be prevented.

### (Second Embodiment)

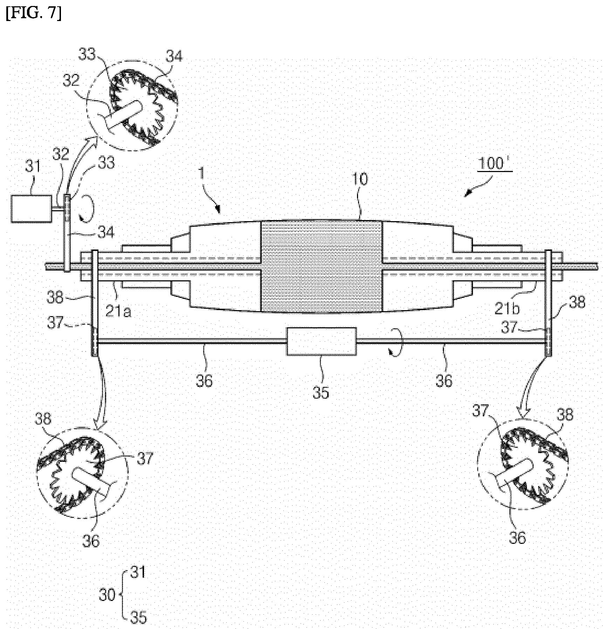

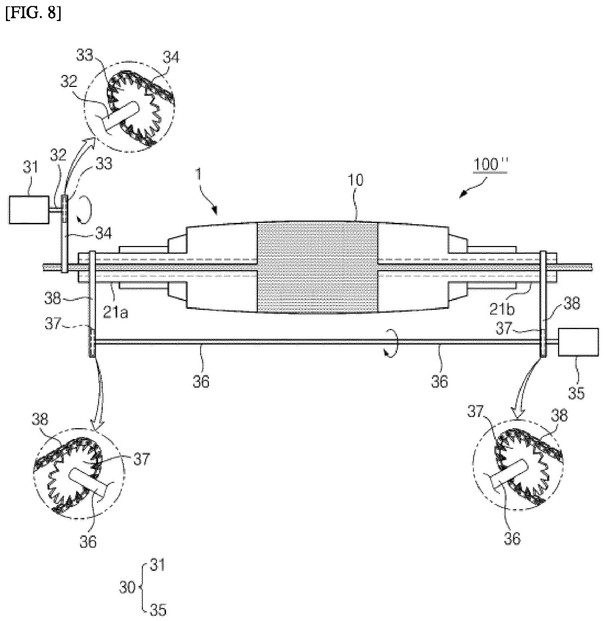

FIG. 7 is a diagram schematically illustrating the calendering roll press according to another exemplary embodiment of the present invention. FIG. 8 is a diagram schematically illustrating another modified example of the calendering roll press according to the present exemplary embodiment.

As illustrated in FIG. 7, the calendering roll press 100' according to another exemplary embodiment of the present invention has the first side roller 20a and the second side roller 20b respectively provided on both sides of the center roller 10 rotate by being connected to a single side motor 35.

That is, the inner wheel drive shaft 11 provided on one side of the center roller 10 rotates by being connected to the center motor 31, and each outer wheel drive shaft 21a, 21b of the first side roller 20a and the second side roller 20b rotates by being commonly connected to a single side motor 35.

To this end, the inner wheel drive shaft 11 of the center motor 31 rotates by being connected to the center sprocket 33 provided on the shaft 32 of the center motor 31 by a chain 34, and each of outer wheel drive shaft 21a, 21b is connected by a chain 38 to each side sprocket 37 provided on both sides of a single shaft 36 extending to both sides of the single side motor 35 and rotates together.

As described above, the first side roller 20a and the second side roller 20b connected to a single side motor 35 rotate at the same angular velocity, and unlike the first embodiment, by rotating the first side roller 20a and the second side roller 20b through a single side motor 35, the overall configuration is simplified and the equipment cost is reduced.

In the present exemplary embodiment, the calendering roll press 100' has a single shaft 36 extending to both sides of the side motor 35, and a side sprocket 37 separately provided on both sides of the shaft 36 is rotatably connected to each side roller 20a, 20b by a chain 38, but
as a modified example, the calendering roll press 100'', as shown in FIG. 8, has a single shaft extending only to one side of the side motor 35, and it is also possible for the side sprocket 37 to each be provided in the shaft 36 in equal spacings and be rotatably connected to each side rollers 20a, 20b by a chain 38.

As above, the present invention has been described with reference to exemplary embodiments, but it should be understood by those skilled in the art or those of ordinary skill in the art that the present invention can be variously modified and changed without departing from the technical scope of the present invention described in the accompanying claims.

## Claims

1. A calendering roll press for manufacturing a dry electrode in which a plurality of calendering crown rolls (1) are arranged to stretch a dry electrode sheet, the calendering roll press comprising:
a calendaring crown roll (1) including:
a center roller (10) having inner wheel drive shafts (11) protruding in a longitudinal direction from a center of both side surfaces of the center roller (10); and
a first side roller (20a) and a second side roller (20b), each having an inner surface facing a respective one of both side surfaces of the center roller (10) in the longitudinal direction, respectively, wherein the first side roller (20a) and the second side roller (20b) each have an outer wheel drive shaft (21a, 21b) protruding from a center of an outer surface thereof in the longitudinal direction, wherein each of the outer wheel drive shafts (21a, 21b) are hollow, so as to allow a respective one of the inner wheel drive shafts (11) to pass therethrough; and
a motor (30) configured to independently and rotatably drive the center roller (10), the first side roller (20a), and the second side roller (20b);
wherein
the motor (30) includes:
a center motor (31) connected to the center roller (10), wherein the center motor (31) is configured to rotate the center roller (10), and
a side motor (35) including a first side motor (35a) and a second side motor (35b) each connected to the first side roller (20a) and the second side roller (20b), respectively, wherein the first (35a) and second (35b) side motors are configured to rotate the respective first (20a) and second (20b) side rollers.

2. The calendering roll press of claim 1, wherein
the center roller (10) and each side roller (20a, 20b) are configured to rotate at different angular velocities.

3. The calendering roll press of claim 1, wherein
the motor (30) is configured to drive the center roller (10) at a slower angular velocity than an angular velocity of each side roller (20a, 20b).

4. The calendering roll press of claim 3, wherein
the motor (30) is configured to drive the first and the second side rollers (20a, 20b) at an equal angular velocity.

5. The calendering roll press of claim 1, wherein
outer circumferential surfaces of the first side roller (20a), the center roller (10), and the second side roller (20b) each have a continuous parabolic surface, wherein the center roller (10) is convex.

6. The calendering roll press of claim 1, wherein
each of the inner wheel drive shafts (11) of the center roller (10) is longer than a respective one of the outer wheel drive shafts (21a, 21b) of the first (20a) and second side rollers (20b), so that each of the inner wheel drive shafts (11) extend to an exterior of the respective one of the outer wheel drive shafts (21a, 21b).

7. The calendering roll press of claim 6, wherein
at least one bearing (23) is provided between an inner periphery surface of each of the outer wheel drive shafts (21a, 21b) and a respective outer periphery surface of each of the inner wheel drive shafts (11).

8. The calendering roll press of claim 7, wherein
the at least one bearing (23) is a ball bearing, a roller bearing, or a journal bearing.

9. The calendering roll press of claim 1, wherein
one of each of the inner wheel drive shafts (11) communicates with the center motor (31), so as to rotate each of the inner wheel drive shafts (11) and the center roller (10), and wherein each of the outer wheel drive shafts (21a, 21b) provided on the outer surface of each of the first and the second side roller (20a, 20b) is configured to rotate by communicating with a respective one of the first and second side motors (35a, 35b).

10. The calendering roll press of claim 9, wherein
each of the inner wheel drive shafts (11) are configured to rotate by communicating with a center sprocket (33) by a connector, wherein the center sprocket (33) is provided on a shaft (32) of a center motor (31), and
each of the outer wheel drive shafts (21a, 21b) are configured to rotate independently by communicating with a respective side sprocket (37) by a respective connector, wherein each side sprocket (37) is provided on a respective shaft (36) of each of the first and second side motors (35a, 35b).

11. The calendering roll press of claim 1, wherein
one of each of the inner wheel drive shafts (11) communicates with the center motor (31), so as to rotate each of the inner wheel drive shafts (11) and the center roller (10), and wherein each of the outer wheel drive shafts (21a, 21b) provided on the outer surface of the respective first and second side rollers (20a, 20b) is configured to rotate together by communicating with a single side motor (35).

12. The calendering roll press of claim 11, wherein
each of the inner wheel drive shafts (11) are configured to rotate by communicating with a center sprocket (33) by a connector, wherein the center sprocket (33) is provided on a shaft (32) of the center motor (31), and
each of the outer wheel drive shafts (21a, 21b) communicate with a respective side sprocket (37) by a respective connector, wherein each of the side sprockets (37) is provided on a respective opposing side of a single shaft (36) in the longitudinal direction, wherein the single shaft (36) is configured to rotate by the single side motor (35).

## Patentansprüche

1. Kalandrier-Walzenpresse zur Herstellung einer Trockenelektrode, in welcher eine Mehrzahl von Kalandrier-Kronenwalzen (1) angeordnet sind, um eine Trockenelektrodenlage zu dehnen, wobei die Kalandrier-Walzenpresse umfasst:
eine Kalandrier-Kronenwalze (1) umfassend:
eine mittlere Walze (10), welche innere Radantriebswellen (11) aufweist, welche von einer Mitte von beiden Seitenflächen der mittleren Walze (10) in einer longitudinalen Richtung vorstehen; und
eine erste Seitenwalze (20a) und eine zweite Seitenwalze (20b), welche jeweils eine innere Fläche aufweisen, welche jeweils zu einer jeweiligen aus beiden Seitenflächen der mittleren Walze (10) in der longitudinalen Richtung weisen, wobei die erste Seitenwalze (20a) und die zweite Seitenwalze (20b) jeweils eine äußere Radantriebswelle (21a, 21b) aufweisen, welche von einer Mitte einer äußeren Fläche davon in der longitudinalen Richtung vorsteht, wobei jede der äußeren Radantriebswellen (21a, 21b) hohl ist, um einer jeweiligen aus den inneren Radantriebswellen (11) zu erlauben, dort hindurch zu treten; und
einen Motor (30), welcher dazu eingerichtet ist, unabhängig und rotierend die mittlere Walze (10), die erste Seitenwalze (20a) und die zweite Seitenwalze (20b) anzutreiben;
wobei
der Motor (30) umfasst:
einen mittleren Motor (31), welcher mit der mittleren Walze (10) verbunden ist, wobei der mittlere Motor (31) dazu eingerichtet ist, die mittlere Walze (10) zu rotieren, und
einen Seitenmotor (35), welcher einen ersten Seitenmotor (35a) und einen zweiten Seitenmotor (35b) umfasst, welche jeweils mit der ersten Seitenwalze (20a) beziehungsweise der zweiten Seitenwalze (20b) verbunden sind, wobei die ersten (35a) und zweiten (35b) Seitenmotoren dazu eingerichtet sind, die jeweiligen ersten (20a) und zweiten (20b) Seitenwalzen zu rotieren.

2. Kalandrier-Walzenpresse nach Anspruch 1, wobei
die mittlere Walze (10) und jede Seitenwalze (20a, 20b) dazu eingerichtet sind, mit unterschiedlichen Winkelgeschwindigkeiten zu rotieren.

3. Kalandrier-Walzenpresse nach Anspruch 1, wobei
der Motor (30) dazu eingerichtet ist, die mittlere Walze (10) mit einer langsameren Winkelgeschwindigkeit als eine Winkelgeschwindigkeit jeder Seitenwalze (20a, 20b) anzutreiben.

4. Kalandrier-Walzenpresse nach Anspruch 3, wobei
der Motor (30) dazu eingerichtet ist, die ersten und die zweiten Seitenwalzen (20a, 20b) mit einer gleichen Winkelgeschwindigkeit anzutreiben.

5. Kalandrier-Walzenpresse nach Anspruch 1, wobei
äußere Umfangsflächen der ersten Seitenwalze (20a), der mittleren Walze (10) und der zweiten Seitenwalze (20b) jeweils eine kontinuierliche parabolische Fläche aufweisen, wobei die mittlere Walze (10) konvex ist.

6. Kalandrier-Walzenpresse nach Anspruch 1, wobei
jede der inneren Radantriebswellen (11) der mittleren Walze (10) länger ist als eine jeweilige der äußeren Radantriebswellen (21a, 21b) der ersten (20a) und der zweiten Seitenwalzen (20b), so dass sich jede der inneren Radantriebswellen (11) zu einer Außenseite der jeweiligen der äußeren Radantriebswellen (21a, 21b) erstreckt.

7. Kalandrier-Walzenpresse nach Anspruch 6, wobei
wenigstens ein Lager (23) zwischen einer inneren Umfangsfläche von jeder der äußeren Radantriebswellen (21a, 21b) und einer jeweiligen äußeren Umfangsfläche von jeder der inneren Radantriebswellen (11) bereitgestellt ist.

8. Kalandrier-Walzenpresse nach Anspruch 7, wobei
das wenigstens eine Lager (23) ein Kugellager, ein Rollenlager oder ein Gleitlager ist.

9. Kalandrier-Walzenpresse nach Anspruch 1, wobei eine aus jeder der inneren Radantriebswellen (11) mit dem mittleren Motor (31) kommuniziert, um jede der inneren Radantriebswellen (11) und der mittleren Walze (10) zu rotieren, und wobei jede aus den äußeren Radantriebswellen (21a, 21b), welche an der äußeren Fläche von jeder der ersten und zweiten Seitenzwalzen (20a, 20b) bereitgestellt sind, dazu eingerichtet ist, durch ein Kommunizieren mit einem jeweiligen aus den ersten und zweiten Seitenmotoren (35a, 35b) zu rotieren.

10. Kalandrier-Walzenpresse nach Anspruch 9, wobei
jede der inneren Radantriebswellen (11) dazu eingerichtet ist, durch ein Kommunizieren mit einem mittleren Ritzel (33) durch einen Verbinder zu rotieren, wobei das mittlere Ritzel (33) an einer Welle (32) eines mittleren Motors (31) bereitgestellt ist, und
jede der äußeren Radantriebswellen (21a, 21b) dazu eingerichtet ist, durch ein Kommunizieren mit einem jeweiligen Seitenritzel (37) durch einen jeweiligen Verbinder unabhängig zu rotieren, wobei jedes Seitenritzel (37) an einer jeweiligen Welle (36) jedes der ersten und zweiten Seitenmotoren (35a, 35b) bereitgestellt ist.

11. Kalandrier-Walzenpresse nach Anspruch 1, wobei
eine aus jeder der inneren Radantriebswellen (11) mit dem mittleren Motor (31) kommuniziert, um jede aus der inneren Radantriebswellen (11) und der mittleren Walze (10) zu rotieren, und wobei jede aus den äußeren Radantriebswellen (21a, 21b), welche an der äußeren Fläche der jeweiligen ersten und zweiten Seitenzwalzen (20a, 20b) bereitgestellt sind, dazu eingerichtet ist, durch ein Kommunizieren mit einem einzelnen Seitenmotoren (35) zusammen zu rotieren.

12. Kalandrier-Walzenpresse nach Anspruch 11, wobei
jede der inneren Radantriebswellen (11) dazu eingerichtet ist, durch ein Kommunizieren mit einem mittleren Ritzel (33) durch einen Verbinder zu rotieren, wobei das mittlere Ritzel (33) an einer Welle (32) des mittleren Motors (31) bereitgestellt ist, und
jede der äußeren Radantriebswellen (21a, 21b) mit einem jeweiligen Seitenritzel (37) durch einen jeweiligen Verbinder kommunizieren, wobei jedes der Seitenritzel (37) an einer jeweils entgegengesetzten Seite einer einzelnen Welle (36) in der longitudinalen Richtung bereitgestellt ist, wobei die einzelne Welle (36) dazu eingerichtet ist, durch den einzelnen Seitenmotor (35) zu rotieren.

## Revendications

1. Presse à rouleaux de calandrage pour la fabrication d'une électrode sèche dans laquelle une pluralité de rouleaux de couronne de calandrage (1) sont agencés pour étirer une feuille d'électrode sèche, la presse à rouleaux de calandrage comprenant :
un rouleau de couronne de calandrage (1) comportant :
un rouleau central (10) présentant des arbres d'entraînement de roue internes (11) faisant saillie dans un sens longitudinal à partir d'un centre des deux surfaces latérales du rouleau central (10) ; et
un premier rouleau latéral (20a) et un second rouleau latéral (20b), chacun présentant une surface interne orientée vers une surface respective des deux surfaces latérales du rouleau central (10) dans le sens longitudinal, dans laquelle le premier rouleau latéral (20a) et le second rouleau latéral (20b) présentent chacun un arbre d'entraînement de roue externe (21a, 21b) qui fait saillie à partir d'un centre d'une surface externe de celui-ci dans le sens longitudinal, dans laquelle chacun des arbres d'entraînement de roue externes (21a, 21b) sont creux, de manière à permettre à l'un des arbres d'entraînement de roue internes (11) respectifs de passer au travers ; et
un moteur (30) configuré pour entraîner indépendamment et en rotation le rouleau central (10), le premier rouleau latéral (20a) et le second rouleau latéral (20b) ;
dans laquelle
le moteur (30) comporte :
un moteur central (31) raccordé au rouleau central (10), dans laquelle le moteur central (31) est configuré pour faire tourner le rouleau central (10), et
un moteur latéral (35) comportant un premier moteur latéral (35a) et un second moteur latéral (35b) raccordés respectivement au premier rouleau latéral (20a) et au second rouleau latéral (20b), dans laquelle les premier (35a) et second (35b) moteurs latéraux sont configurés pour faire tourner les premier (20a) et second (20b) rouleaux latéraux respectifs.

2. Presse à rouleaux de calandrage selon la revendication 1, dans laquelle le rouleau central (10) et chaque rouleau latéral (20a, 20b) sont configurés pour tourner à des vitesses angulaires différentes.

3. Presse à rouleaux de calandrage selon la revendication 1, dans laquelle le moteur (30) est configuré pour entraîner le rouleau central (10) à une vitesse angulaire plus lente qu'une vitesse angulaire de chaque rouleau latéral (20a, 20b).

4. Presse à rouleaux de calandrage selon la revendication 3, dans laquelle le moteur (30) est configuré pour entraîner les premier et second rouleaux latéraux (20a, 20b) à une vitesse angulaire égale.

5. Presse à rouleaux de calandrage selon la revendication 1, dans laquelle les surfaces circonférentielles externes du premier rouleau latéral (20a), du rouleau central (10) et du second rouleau latéral (20b) présentent chacune une surface parabolique continue, dans laquelle le rouleau central (10) est convexe.

6. Presse à rouleaux de calandrage selon la revendication 1, dans laquelle chacun des arbres d'entraînement de roue internes (11) du rouleau central (10) est plus long que l'un des arbres d'entraînement de roue externes (21a, 21b) respectifs des premier (20a) et second rouleaux latéraux (20b), de sorte que chacun des arbres d'entraînement de roue internes (11) s'étende vers l'extérieur de l'arbre respectif des arbres d'entraînement de roue externes (21a, 21b).

7. Presse à rouleaux de calandrage selon la revendication 6, dans laquelle au moins un roulement (23) est fourni entre une surface périphérique interne de chacun des arbres d'entraînement de roue externes (21a, 21b) et une surface périphérique externe respective de chacun des arbres d'entraînement de roue internes (11).

8. Presse à rouleaux de calandrage selon la revendication 7, dans laquelle l'au moins un roulement (23) est un roulement à billes, un roulement à rouleaux, ou un palier lisse.

9. Presse à rouleaux de calandrage selon la revendication 1, dans laquelle l'un de chacun des arbres d'entraînement de roue internes (11) communique avec le moteur central (31), de manière à faire tourner chacun des arbres d'entraînement de roue internes (11) et le rouleau central (10), et dans laquelle chacun des arbres d'entraînement de roue externes (21a, 21b) fournis sur la surface externe de chacun des premier et second rouleaux latéraux (20a, 20b) est configuré pour tourner en communiquant avec un moteur latéral respectif des premier et second moteurs latéraux (35a, 35b).

10. Presse à rouleaux de calandrage selon la revendication 9, dans laquelle chacun des arbres d'entraînement de roue internes (11) est configuré pour tourner en communiquant avec un pignon central (33) par un raccord, dans laquelle le pignon central (33) est fourni sur un arbre (32) d'un moteur central (31), et
chacun des arbres d'entraînement de roue externes (21a, 21b) est configuré pour tourner indépendamment en communiquant avec un pignon latéral (37) respectif par un raccord respectif, dans laquelle chaque pignon latéral (37) est fourni sur un arbre (36) respectif de chacun des premier et second moteurs latéraux (35a, 35b).

11. Presse à rouleaux de calandrage selon la revendication 1, dans laquelle l'un de chacun des arbres d'entraînement de roue internes (11) communique avec le moteur central (31), de manière à faire tourner chacun des arbres d'entraînement de roue internes (11) et le rouleau central (10), et dans laquelle chacun des arbres d'entraînement de roue externes (21a, 21b) fournis sur la surface externe des premier et second rouleaux latéraux (20a, 20b) respectifs est configuré pour tourner ensemble en communiquant avec un moteur unilatéral (35).

12. Presse à rouleaux de calandrage selon la revendication 11, dans laquelle chacun des arbres d'entraînement de roue internes (11) est configuré pour tourner en communiquant avec un pignon central (33) par un raccord, dans laquelle le pignon central (33) est fourni sur un arbre (32) du moteur central (31), et
chacun des arbres d'entraînement de roue externes (21a, 21b) communique avec un pignon latéral (37) respectif par un raccord respectif, dans laquelle chacun des pignons latéraux (37) est fourni sur un côté opposé respectif d'un arbre simple (36) dans le sens longitudinal, dans laquelle l'arbre simple (36) est configuré pour tourner par le moteur unilatéral (35).
